# FASCICULE DE BREVET EUROPEEN

(11) **EP 2 981 571 B1**
(45) Date de publication et mention de la délivrance du brevet: **15.08.2018**
(21) Numéro de dépôt: 14717424.7
(22) Date de dépôt: 01.04.2014
(51) Int. Cl.: C08J 5/12, B29C 65/02, B29C 65/34, B29K 21/00, B29K 105/06, B29C 65/48, B29C 65/50, B29C 65/00, B29L 31/30, B29C 65/20, B29C 65/36, B29C 35/02, B32B 27/08, B32B 27/12, B29K 71/00, B29L 7/00, B29L 9/00, B32B 5/02, B32B 27/32

(54) **PROCEDE POUR REALISER UNE LIAISON STRUCTURALE SOUDEE ENTRE UN MATERIAU COMPOSITE A MATRICE THERMOPLASTIQUE ET UN ELASTOMERE**
VERFAHREN ZUR HERSTELLUNG EINER GESCHWEISSTEN STRUKTURVERBINDUNG ZWISCHEN EINEM THERMOPLASTISCHEN MATRIXVERBUNDSTOFF UND EINEM ELASTOMER
METHOD FOR PREPARING A WELDED STRUCTURAL LINK BETWEEN A THERMOPLASTIC MATRIX COMPOSITE MATERIAL AND AN ELASTOMER

(30) Priorité: 03.04.2013 FR 1352984
(43) Date de publication de la demande: 10.02.2016
(73) Titulaire: ArianeGroup SAS, 75015 Paris (FR)
(72) Inventeur: MENOCHET, Audrey, F-33110 Le Bouscat (FR)
(74) Mandataire: Ipside
(86) Numéro de dépôt international: PCT/EP2014/056493
(87) Numéro de publication internationale: WO 2014/161833

(56) Documents cités:
- DE-A1- 2 746 544
- GB-A- 481 327
- GB-A- 820 339
- GB-A- 2 207 087
- JP-A- S6 168 229

## Description

### DOMAINE DE L'INVENTION

L'invention concerne le domaine des assemblages chimiques structuraux de matériaux différents, et plus précisément l'assemblage de matériaux élastomères avec des matériaux thermoplastiques.

De manière très générale, on appelle ici matériau thermoplastique tout matériau comportant un certain pourcentage de matériau thermoplastique constituant une matrice, qu'il s'agisse d'un matériau constitué seulement de matériau thermoplastique ou encore par exemple d'un matériau composite à fibres continues et à matrice thermoplastique.

L'invention trouve, par exemple, une application particulière dans le contexte de la fabrication d'étages propulsifs de fusées à poudre, pour réaliser la liaison du réservoir avec les jupes.

### CONTEXTE DE L'INVENTION - ART ANTERIEUR

L'assemblage par soudage de deux matériaux composites à matrice thermoplastique haute performance fait généralement appel à des procédés d'assemblage connus. Par ailleurs, afin de porter la zone d'assemblage à la température voulue, il est possible de mettre en oeuvre plusieurs principes connus de chauffage tels que les chauffages par gaz chaud (étuve, autoclave), par vibration (ultrasons, rotation), par induction, par résistance, etc... Ce type d'assemblage est notamment décrit dans le livre de Michael J. Troughton intitulé « Handbook of plastics joining » (Plastics Design Library). ISBN: 978-1-884207-17-4.

Inversement, il n'existe pas, à ce jour, de moyen connu permettant de réaliser l'assemblage par soudage d'un matériau composite à matrice thermoplastique et d'un matériau de type élastomère. Cette absence semble tirer son origine du fait que, dans la mesure où les élastomères n'ont pas la propriété de passer de façon réversible de l'état solide à l'état fondu, une technique d'assemblage nécessitant de chauffer les matériaux à assembler, au moins au niveau de la zone d'assemblage, ne semble pas évidente pour l'homme du métier.

Pour certaines applications, les techniques d'assemblage connues, permettant d'assembler un élément en matériau thermoplastique avec un élément en matériau polymère ne présentent pas les qualités requises, en termes de tenue mécanique notamment.

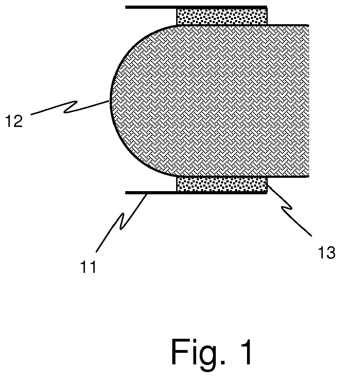

C'est le cas par exemple, comme l'illustre schématiquement la figure 1, pour l'assemblage d'une virole 11 (en matériau métallique ou composite à matrice thermoplastique ou thermodurcissable) sur un réservoir 12 en composite à matrice thermoplastique pour constituer un étage propulsif de lanceur à poudre, ou un réservoir de gaz grand public.

En effet cet assemblage nécessite l'insertion d'une couche 13 de matériau élastomère au sein de la liaison, la couche de matériau élastomère ayant pour rôle d'absorber les déformations différentielles importantes qui apparaissent entre les 2 structures. Par suite l'insertion de cette couche 13 de matériau élastomère intercalaire nécessite de réaliser l'assemblage de cette couche sur les deux éléments en matériau composite que constituent le réservoir 12 et la virole 11, cet assemblage devant nécessairement être de grande qualité mécanique, du fait des contraintes imposées à l'assemblage.

Or, en termes de tenue mécanique une liaison soudée est généralement supérieure à une liaison collée. En effet après soudage, il n'y a plus d'interface différentiée ente les deux pièces assemblées, du fait de la diffusion des molécules d'une pièce à l'autre, alors que dans le cas d'un collage, il y a autant d'interfaces que de couches nécessaires à la création de la liaison, couches parmi lesquelles on trouve principalement outre la couche d'adhésif proprement dite, les primaires d'adhésion, ainsi que les traitements appliqués aux surfaces à assembler.

Par ailleurs dans le cas du soudage, on supprime également les contraintes engendrées par la préparation des surfaces avant assemblage et par leur protection contre les pollutions, ces opérations étant nécessaires, voire impératives, dans le cas d'un assemblage par collage.

Le document GB 2 207 087 A décrit un procédé pour réaliser une liaison structurale soudée entre un matériau thermoplastique et un élastomère pour lequel on presse un tissu d'un matériau adhésif dans un corps prémoulé dudit élastomère avant de durcir complètement ledit élastomère, de telle sorte que l'élastomère non complètement polymérisé pénètre dans des interstices du tissus avant de durcir complètement ledit élastomère pour produire un composite dudit tissu étroitement lié audit élastomère, et on lie ensuite ledit composite à un autre matériau sur la surface extérieure dudit tissu en utilisant un adhésif qui est compatible avec ledit tissu et ledit autre matériau.

Le document DE 27 46 554 A1 décrit un moulage de caoutchouc de silicone revêtu d'un flocage de polyoléfine et / ou de fibres en partie ancré dans le caoutchouc en sorte de faciliter le soudage du moulage en caoutchouc de silicone à des moulages dissimilaires.

### PRESENTATION DE L'INVENTION

Un but de l'invention est de proposer une solution permettant de réaliser l'assemblage structural par soudage d'un matériau thermoplastique et d'un matériau élastomère, l'attention étant portée sur ces deux familles de matériaux.

A cet effet l'invention a pour objet principal un procédé selon la revendication 1 annexée.

Selon diverses dispositions particulières, pouvant être considérées en conjonction, le procédé selon l'invention peut par ailleurs présenter les caractéristiques qui suivent.

Selon une disposition particulière l'opération d'élaboration de l'élastomère fonctionnalisé comporte elle-même plusieurs étapes:
- une première étape de nettoyage des différentes parties du moule de vulcanisation utilisé;
- une deuxième étape durant laquelle on applique le textile non tissé à la surface du matériau élastomère
- une troisième étape durant laquelle on procède à la vulcanisation sous-pression du matériau élastomère; la pression appliquée étant déterminée de façon à ce que le textile non tissé placé en surface de l'élastomère s'incorpore à celui-ci, au moins en surface, durant le processus de vulcanisation.

Selon une autre disposition particulière, le textile non tissé est réalisé en mettant en oeuvre les opérations suivantes:
- cardage des monofilaments de matériau thermoplastique;
- réalisation de voiles superposés les uns sur les autres et maintenus entre eux par aiguilletage ;
- renforcement du textile par hydroliage.

Selon une autre disposition particulière, le textile non tissé est réalisé dans un matériau thermoplastique choisi de façon à pouvoir à la fois être soudé au matériau thermoplastique formant la matrice du matériau composite et à présenter une bonne compatibilité avec le matériau élastomère.

Selon une variante de cette disposition particulière, le textile non tissé est réalisé dans un matériau thermoplastique identique à celui formant la matrice du matériau composite.

Selon une autre disposition particulière, le matériau composite étant un composite carbone/polyétheréthercétone et le matériau élastomère étant de type HNBR, le textile non tissé utilisé est formé de fibres de polyétherimide.

Selon une autre disposition particulière, la seconde opération de soudage consiste à chauffer les surfaces de contact des deux matériaux à souder en interposant entre ces deux surfaces une toile métallique qui fait fonction de résistance chauffante, la toile métallique étant elle-même imprégnée de matériau thermoplastique.

Selon une autre disposition particulière, l'opération de soudage est précédée d'une opération préliminaire de préparation des surfaces des matériaux à assembler, cette opération pouvant consister, selon l'état de ces surfaces, soit en un simple dégraissage à l'aide d'un solvant approprié, soit en un ponçage fin de la surface fonctionnalisée de l'élément en élastomère, suivi d'un nettoyage des surfaces avec le même solvant.

Selon une autre disposition particulière, le matériau composite étant un composite carbone/polyétheréthercétone et le matériau élastomère étant de type HNBR, l'opération de fonctionnalisation du matériau élastomère comporte les opérations suivantes:
a) une première opération de mise en place, sur le plateau inférieur du moule de vulcanisation, des éléments suivants:
   - deux couches superposées de tissu de verre téflonné;
   - un pli de textile non-tissé constitué de fibres polyétherimide;
   - les plis du matériau élastomère cru non vulcanisé;
   - un jeu de cales de bordurage;
   - deux couches superposées de tissu de verre téflonné;
   l'ensemble étant coiffé par le plateau supérieur du moule de vulcanisation;
b) une deuxième opération de mise en place de l'empilement réalisé sur le plateau d'une presse chauffante préchauffée à une température θ₂ de 140°C;
c) une troisième opération de pressage à chaud de l'empilement, durant laquelle on appliquer le cycle de pressage nominal adapté à l'élastomère considéré.
d) une quatrième opération durant laquelle on retire le moule de la presse alors que celle-ci maintient la température θ₂ de 140°C, on démoule l'élastomère fonctionnalisé et on laisse refroidir celui-ci à température ambiante.

Selon une variante de cette disposition particulière, le cycle de pressage de la troisième opération comporte :
- une phase de montée progressive en température jusqu'à une température haute θ₁ de 230°C avec un gradient de 2.5°C/min,
- une phase de maintien à la température θ₁ durant 10 minutes,
- une phase de descente en température jusqu'à la température θ₂ de 140°C selon un gradient en 2.5°C/min;

Selon une autre disposition particulière, le matériau composite étant un composite carbone/polyétheréthercétone et le matériau élastomère étant de type HNBR, l'opération de soudage proprement dite comporte les étapes suivantes:
a) Une première étape de mise en place durant laquelle on dispose principalement, dans l'ordre, sur une plaque de matériau isolant thermique, les éléments suivants:
   - un premier film en polyimide résistant à la chaleur,
   - le matériau élastomère fonctionnalisé,
   - un premier film de polyétherimide,
   - une toile métallique préimprégnée de polyétherimide,
   - un second film de polyétherimide,
   - le matériau composite thermoplastique,
   - un second film en polyimide,
   - une couche d'isolant thermique,
   - un tissu de verre;
b) Une deuxième étape durant laquelle on réalise une vessie sous vide avec un film de polyimide disposé de façon à laisser la toile métallique ressortir, l'étanchéité de ladite vessie étant assurée au moyen de mastic à haute température.
c) Une troisième étape durant laquelle on met sous vide la vessie, on connecte un bloc d'alimentation électrique sur la toile métallique et on applique différentes valeurs d'intensité suivant un cycle approprié.
d) Une quatrième étape durant laquelle on retire le film de polyimide servant de bâche à vide et on démonte l'empilement.

Selon une autre disposition particulière, au cours de la troisième étape on applique sur la toile métallique un courant de 15,6 ampères pendant 200 secondes puis un courant de 10 Ampères durant 100 secondes.

### DESCRIPTION DES FIGURES

Les caractéristiques et avantages de l'invention seront mieux appréciés grâce à la description qui suit, description qui s'appuie sur les figures annexées qui présentent:
- la figure1, une illustration schématique d'un exemple de structure pour laquelle l'assemblage par soudage des différents éléments semble particulièrement adapté, du fait des contraintes mécaniques imposées à cet assemblage;
- la figure 2, une illustration d'un exemple de mise en oeuvre de l'étape de fonctionnalisation de l'élastomère du procédé selon l'invention;
- la figure 3, une illustration d'un exemple de mise en oeuvre de l'opération de soudage selon l'invention.

### DESCRIPTION DETAILLEE

Le principe du procédé selon l'invention consiste principalement dans la mise en oeuvre avant le soudage proprement dit, d'une opération de préparation du matériau élastomère. Cette opération consiste à fonctionnaliser, c'est-à-dire à modifier, la surface ou le coeur même de l'élastomère afin de lui conférer les propriétés nécessaires pour pouvoir le souder au matériau thermoplastique. Par "fonctionnaliser le matériau élastomère" on entend donc "modifier" la composition des couches superficielles de ce matériau élastomère en y incorporant un matériau thermoplastique.

A cet effet, on insère dans le matériau élastomère, ou du moins à sa surface, un textile non-tissé formé de fibres d'un matériau thermoplastique présentant à la fois une compatibilité avec le matériau élastomère et pouvant être soudé à la matrice du matériau composite thermoplastique auquel on veut assembler le matériau élastomère considéré.

Par compatibilité entre le matériau élastomère et le matériau thermoplastique formant le textile non tissé, on entend principalement, dans ce cas, une compatibilité physico-chimique entre les deux matériaux. Cette compatibilité se traduit par une interaction possible entre le matériau thermoplastique du textile non tissé et l'élastomère, interaction qu'un homme du métier de la chimie des matières plastiques sait caractériser par des critères spécifiques, de nature plutôt chimique : mouillabilité, interdiffusion entre les matériaux, liaison chimiques.

Cependant, on s'intéresse également à une compatibilité de mise en oeuvre entre les différents matériaux (compatibilité physique), notamment en ce qui concerne la nécessité de pouvoir vulcaniser en température l'élastomère sans pour autant détériorer le matériau thermoplastique formant le textile incorporé.

L'opération d'élaboration de l'élastomère fonctionnalisé comporte plusieurs étapes:
- une première étape de nettoyage des différentes parties du moule de vulcanisation, nettoyage réalisé, par exemple, au Méthyléthylcétone (ou MEC).
- une seconde étape durant laquelle on applique le textile non tissé à la surface du matériau élastomère cru (i.e. non encore vulcanisé) et on procède à la vulcanisation sous-pression du matériau élastomère. Selon l'invention, la pression appliquée est déterminée de façon à ce que le textile non tissé placé en surface de l'élastomère s'incorpore à celui-ci, au moins en surface, durant le processus de vulcanisation.

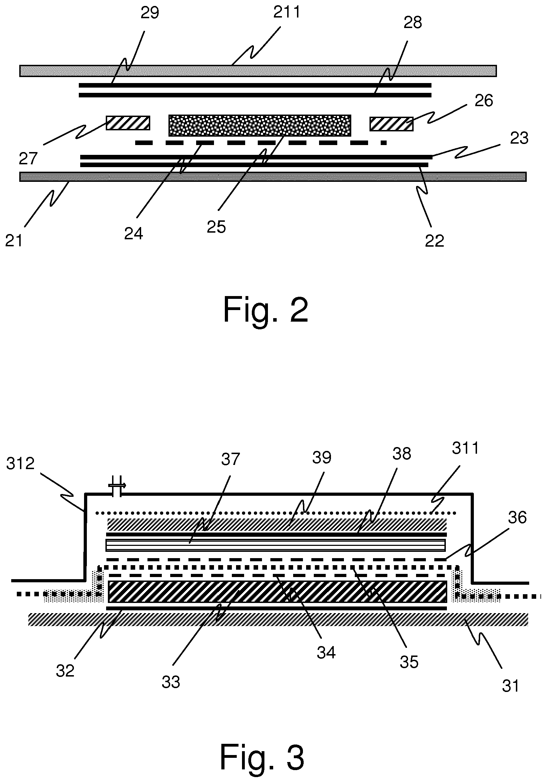

Ainsi par exemple, dans une forme de mise en oeuvre particulière de l'invention, adaptée plus particulièrement au soudage d'un matériau composite à matrice de polyétheréthercétone (PEEK) et à renfort en fibre de carbone (composite thermoplastique carbone/PEEK) avec un élastomère du type des caoutchoucs nitrile hydrogénés (butadiène-acrylonitrile hydrogénés), ou Buna ou encore HNBR (acronyme de la dénomination anglosaxonne ", hydrogenated nitrile butadiene rubber"), l'élaboration proprement dite de l'élastomère fonctionnalisé peut elle-même comporter les opérations suivantes:
a) Une première opération de mise en place, sur le plateau inférieur 21 du moule de vulcanisation, des éléments nécessaires à la mise en oeuvre de la fonctionnalisation du matériau élastomère, à savoir, dans l'ordre et comme illustré par la figure 2 :
   - deux couches superposées 22 et 23 de tissu de verre téflonné, dont le rôle consiste à permettre le démoulage de l'élastomère après polymérisation;
   - un pli de textile non-tissé 24, constitué de fibres Polyétherimide (ou PEI),
   - les plis du matériau élastomère cru 25 (non vulcanisé), à fonctionnaliser,
   - un jeu de cales de bordurage 26, 27, des cales en acier inoxydable type 304L par exemple,
   - deux couches superposées 28 et 29 de tissu de verre téflonné, assurant un rôle analogue à celui assuré par les couches 22 et 23.
   Après mise en place, l'ensemble est coiffé par le plateau supérieur 211 du moule de vulcanisation de sorte que tous les éléments listés précédemment sont placés entre le plateau inférieur 21 et le plateau supérieur 211 du moule;
b) une deuxième opération de mise en place de l'empilement réalisé sur le plateau d'une presse chauffante préchauffée à une température θ₂ de140°C;
c) une troisième opération de pressage à chaud de l'empilement, durant laquelle on appliquer le cycle de pressage nominal adapté à l'élastomère considéré, ce cycle comportant :
   - une phase de montée progressive en température jusqu'à une température haute θ₁ (230°C en 2.5°C/min),
   - une phase de maintien à la température θ₁ (palier de 10 minutes à 230°C),
   - une phase de descente en température jusqu'à la température θ₂ (140°C en 2.5°C/min);
d) une quatrième opération durant laquelle on retire le moule de la presse alors que celle-ci maintient la température θ₂ (140°C), on démoule l'élastomère fonctionnalisé et on laisse refroidir celui-ci à température ambiante.

On obtient ainsi un élastomère vulcanisé fonctionnalisé en surface, comportant une base d'élastomère classique présentant une couche superficielle d'élastomère fonctionnalisé par la couche de textile non-tissé 24 formé de fibres en matériau thermoplastique, une couche de 0,4 mm d'épaisseur par exemple.

Il est à noter que selon l'invention, le textile non-tissé utilisé est ici constitué, de préférence, de fibres courtes de matériau thermoplastique, de PEI par exemple, enchevêtrées et réparties suivant une orientation aléatoire. Le procédé de fabrication de ce textile non tissé comporte principalement les opérations suivantes :
- cardage des monofilaments de matériau thermoplastique;
- réalisation de voiles superposés les uns sur les autres et maintenus entre eux par aiguilletage ;
- renforcement du textile par hydroliage.

Dans une forme de réalisation particulière, le textile non tissé est choisi dans le même matériau que celui qui constitue la matrice du matériau composite auquel on doit souder le matériau élastomère, un textile de densité 100g/m², aiguilleté et hydrolié sous une pression de 40 bars par exemple.

Il est à noter cependant que ce textile non tissé peut être réalisé dans un matériau différent, notamment pour satisfaire au mieux la double exigence de bonne adhérence des deux matériaux thermoplastiques (i.e. celui du matériau composite et celui du textile de fonctionnalisation de l'élastomère) et de bonne compatibilité du matériau constituant le textile de fonctionnalisation et du matériau élastomère.

Une fois le matériau polymère fonctionnalisé, le procédé selon l'invention se poursuit par l'étape de soudage proprement dite, opération qui, grâce à la fonctionnalisation du matériau polymère se déroule avantageusement de manière analogue à une opération de soudage de deux pièces en matériau composite à matrice thermoplastique. Cette opération peut notamment être réalisée par induction ou par résistance.

Il est à noter, qu'avantageusement, l'opération de soudage n'est pas soumise à une quelconque contrainte de délai pour être réalisée, contrairement à ce qui est susceptible de se produire pour un assemblage par collage. Dans la mesure où le matériau élastomère fonctionnalisé est vulcanisé avant assemblage, le soudage des deux matériaux peut ainsi être réalisé au moment considéré comme le plus approprié, moment qui peut être plus ou moins éloigné dans le temps de celui d'achèvement de la fonctionnalisation.

La méthode par résistance consiste à chauffer localement l'interface entre le matériau composite et l'élastomère fonctionnalisé, pour obtenir une liaison entre la matrice thermoplastique du matériau composite et la partie thermoplastique de l'élastomère fonctionnalisé.

Selon l'invention, l'étape de soudage proprement dite débute par une opération préliminaire de préparation des surfaces à assembler. Selon l'état de ces surfaces la préparation peut consister en un simple dégraissage à l'aide d'un solvant approprié, de l'éthanol par exemple, soit en un ponçage fin de la surface fonctionnalisée de l'élément en élastomère, avec un papier abrasif Sic de grain 400 par exemple, suivi d'un nettoyage, à l'aide du même solvant, des surfaces et en particulier de la surface poncée. Par solvant approprié on entend ici un solvant des corps gras qui par sa nature ou sa composition ne présente aucun risque d'occasionner une dissolution du matériau lui-même.

Elle se poursuit ensuite par une opération consistant à chauffer les surfaces de contact des deux matériaux à souder en interposant entre ces deux surfaces une toile métallique qui fait fonction de résistance chauffante; l'opération étant réalisée sous vide.

Selon l'invention la toile métallique est elle-même imprégnée de matériau thermoplastique.

Ainsi par exemple, dans une forme de mise en oeuvre particulière de l'invention, adaptée plus particulièrement au soudage d'un matériau composite à matrice PEEK et à renfort en fibre de carbone (composite thermoplastique carbone/PEEK) avec un élastomère de type HNBR (Buna), l'opération de soudage proprement dite peut elle-même comporter les étapes suivantes:
a) Une première étape de mise en place durant laquelle, comme illustré par la figure 3, on dispose principalement, dans l'ordre, sur une plaque 31 de matériau isolant thermique, de NL FIH par exemple, les éléments suivants:
   - un premier film 32 en polyimide résistant à la chaleur, de préférence un film d'Upilex®, destiné à favoriser le désassemblage de l'ensemble après soudage,
   - le matériau élastomère fonctionnalisé 33,
   - un premier film 34 de polyétherimide (PEI), de type Ultem 1000 *par exemple,*
   - une toile métallique 35 préimprégnée de PEI, par exemple une toile de référence 102083 fabriquée par la sté Gantois,
   - un second film 36 de polyétherimide (PEI),
   - le matériau composite thermoplastique 37 (C/PEEK) revêtu de PEI,
   - un second film 38 en polyimide Upilex destiné également à favoriser le désassemblage de l'ensemble après soudage,
   - une couche d'isolant thermique 39 (NL FIH),
   - un tissu de verre 311, de type E5555 par exemple, destiné à favoriser le drainage de l'air présent.
b) Une deuxième étape durant laquelle on réalise une vessie sous vide avec un film 312 de polyimide (Thermalimide) disposé de façon à laisser la toile métallique imprégnée de PEI ressortir ; l'étanchéité étant obtenue avec un mastic haute température A800 3G.
c) Une troisième étape durant laquelle on met sous vide la vessie 312 ainsi réalisée, on connecte un bloc d'alimentation électrique sur la toile métallique 35 et on applique différentes valeurs d'intensité suivant un cycle approprié: par exemple 15.6 ampères pendant 200 secondes puis 10 Ampères durant 100 secondes.
d) Une quatrième étape durant laquelle on retire le film de polyimide 312 servant de bâche à vide et on démonte l'empilement, de façon à récupérer l'assemblage élastomère-composite thermoplastique ainsi réalisé.

## Revendications

1. Procédé pour réaliser une liaison structurale soudée entre un matériau composite à matrice thermoplastique et un élastomère, comportant les opérations suivantes:
- une première opération de fonctionnalisation du matériau élastomère (25) au moyen d'un textile non tissé (24) formé de fibres de matériau thermoplastique, la fonctionnalisation étant réalisée par mise en place du textile à la surface du matériau élastomère cru et pénétration du textile dans la couche superficielle du matériau élastomère durant l'opération de vulcanisation dudit matériau élastomère, la vulcanisation étant réalisée par pressage à chaud du matériau élastomère et du textile déposé à sa surface;
- une seconde opération de soudage proprement dit, durant laquelle on réalise le soudage du matériau composite thermoplastique (37) à la couche fonctionnalisée du matériau élastomère (33).

2. Procédé selon la revendication 1, **caractérisé en ce que** l'opération d'élaboration de l'élastomère fonctionnalisé comporte elle-même plusieurs étapes:
- une première étape de nettoyage des différentes parties du moule (21, 211) de vulcanisation utilisé;
- une deuxième étape durant laquelle on applique le textile non tissé (24) à la surface du matériau élastomère (25);
- une troisième étape durant laquelle on procède à la vulcanisation sous-pression du matériau élastomère; la pression appliquée étant déterminée de façon à ce que le textile non tissé placé en surface de l'élastomère s'incorpore à celui-ci, au moins en surface, durant le processus de vulcanisation.

3. Procédé selon l'une des revendications 1 ou 2, **caractérisé en ce que** le textile non tissé (24) est réalisé en mettant en oeuvre les opérations suivantes:
- cardage des monofilaments de matériau thermoplastique;
- réalisation de voiles superposés les uns sur les autres et maintenus entre eux par aiguilletage ;
- renforcement du textile par hydroliage.

4. Procédé selon l'une quelconque des revendications 1 à 3, **caractérisé en ce que** le textile non tissé (24) est réalisé dans un matériau thermoplastique choisi de façon à pouvoir à la fois être soudé au matériau thermoplastique formant la matrice du matériau composite et à présenter une bonne compatibilité avec le matériau élastomère.

5. Procédé selon la revendication 4, **caractérisé en ce que** le textile non tissé (24) est réalisé dans un matériau thermoplastique identique à celui formant la matrice du matériau composite (37).

6. Procédé selon l'une quelconque des revendications 1 à 5, **caractérisé en ce que**, le matériau composite (37) étant un composite carbone/polyétheréthercétone et le matériau élastomère (25) étant de type HNBR, le textile non tissé (24) utilisé est formé de fibres de polyétherimide.

7. Procédé selon l'une quelconque des revendications précédentes, **caractérisé en ce que** la seconde opération de soudage consiste à chauffer les surfaces de contact des deux matériaux à souder (33, 37) en interposant entre ces deux surfaces une toile métallique (35) qui fait fonction de résistance chauffante, la toile métallique étant elle-même imprégnée de matériau thermoplastique.

8. Procédé selon la revendication 7, **caractérisé en ce que** l'opération de soudage est précédée d'une opération préliminaire de préparation des surfaces des matériaux à assembler, cette opération pouvant consister, selon l'état de ces surfaces, soit en un simple dégraissage à l'aide d'un solvant approprié, soit en un ponçage fin de la surface fonctionnalisée de l'élément en élastomère, suivi d'un nettoyage des surfaces avec le même solvant.

9. Procédé selon l'une quelconque des revendications précédentes, **caractérisé en ce que**, le matériau composite étant un composite carbone/polyétheréthercétone et le matériau élastomère étant de type HNBR, l'opération de fonctionnalisation du matériau élastomère comporte les opérations suivantes:
a) une première opération de mise en place, sur le plateau inférieur (21) du moule de vulcanisation, des éléments suivants:
- deux couches superposées (22, 23) de tissu de verre téflonné;
- un pli de textile non-tissé (24) constitué de fibres polyétherimide;
- les plis du matériau élastomère cru (25) non vulcanisé;
- un jeu de cales de bordurage (26, 27);
- deux couches superposées (28, 29) de tissu de verre téflonné;
l'ensemble étant coiffé par le plateau supérieur (211) du moule de vulcanisation;
b) une deuxième opération de mise en place de l'empilement réalisé sur le plateau d'une presse chauffante préchauffée à une température θ2 de 140°C;
c) une troisième opération de pressage à chaud de l'empilement, durant laquelle on applique le cycle de pressage nominal adapté à l'élastomère considéré.
d) une quatrième opération durant laquelle on retire le moule de la presse alors que celle-ci maintient la température θ2 de 140°C, on démoule l'élastomère fonctionnalisé et on laisse refroidir celui-ci à température ambiante.

10. Procédé selon la revendication 9, **caractérisé en ce que** le cycle de pressage de la troisième opération comporte :
- une phase de montée progressive en température jusqu'à une température haute θ1 de 230°C avec un gradient de 2.5°C/min,
- une phase de maintien à la température θ1 durant 10 minutes,
- une phase de descente en température jusqu'à la température θ2 de 140°C selon un gradient en 2.5°C/min;

11. Procédé selon l'une quelconque des revendications précédentes, **caractérisé en ce que**, le matériau composite étant un composite carbone/polyétheréthercétone et le matériau élastomère étant de type HNBR, l'opération de soudage proprement dite comporte les étapes suivantes:
a) Une première étape de mise en place durant laquelle on dispose principalement, dans l'ordre, sur une plaque (31) de matériau isolant thermique, les éléments suivants:
- un premier film (32) en polyimide résistant à la chaleur,
- le matériau élastomère fonctionnalisé (33),
- un premier film (34) de polyétherimide,
- une toile métallique (35) préimprégnée de polyétherimide,
- un second film (36) de polyétherimide,
- le matériau composite thermoplastique (36),
- un second film (37) en polyimide,
- une couche d'isolant thermique (38),
- un tissu de verre (311);
b) Une deuxième étape durant laquelle on réalise une vessie sous vide avec un film (312) de polyimide disposé de façon à laisser la toile métallique (35) ressortir, l'étanchéité de ladite vessie étant assurée au moyen de mastic à haute température.
c) Une troisième étape durant laquelle on met sous vide la vessie (312), on connecte un bloc d'alimentation électrique sur la toile métallique (35) et on applique différentes valeurs d'intensité suivant un cycle approprié.
d) Une quatrième étape durant laquelle on retire le film de polyimide (312) servant de bâche à vide et on démonte l'empilement.

12. Procédé selon la revendication 11, **caractérisé en ce qu'**au cours de la troisième étape on applique sur la toile métallique (35) un courant de 15.6 ampères pendant 200 secondes puis un courant de 10 Ampères durant 100 secondes.

## Patentansprüche

1. Verfahren zur Herstellung einer geschweißten Strukturverbindung zwischen einem Verbundwerkstoff mit thermoplastischer Matrix und einem Elastomer, die folgenden Vorgänge aufweisend:
- einen ersten Vorgang der Funktionalisierung des Elastomer-Werkstoffs (25) mittels eines Vliesstoffes (24), der aus Fasern eines thermoplastischen Werkstoffs gebildet wird, wobei die Funktionalisierung durch Anbringen des Stoffes an der Oberfläche des rohen Elastomer-Werkstoffs und Eindringen des Stoffes in die Oberflächenschicht des Elastomer-Werkstoffs während des Vorgangs der Vulkanisierung des Elastomer-Werkstoffs durchgeführt wird, wobei die Vulkanisierung durch Warmpressen des Elastomer-Werkstoffs und des auf seiner Oberfläche abgesetzten Stoffes durchgeführt wird;
- einen zweiten Vorgang des eigentlichen Schweißens, bei dem man die Schweißung des thermoplastischen Verbundwerkstoffs (37) an der funktionalisierten Schicht des Elastomer-Werkstoffs (33) durchführt.

2. Verfahren nach Anspruch 1, **dadurch gekennzeichnet, dass** der Vorgang der Ausarbeitung des funktionalisierten Elastomers selbst mehrere Schritte aufweist:
- einen ersten Schritt der Reinigung der verschiedenen Abschnitte der verwendeten Vulkanisierungsform (21, 211);
- einen zweiten Schritt, bei dem man den Vliesstoff (24) auf der Oberfläche des Elastomer-Werkstoffs (25) aufbringt;
- einen dritten Schritt, bei dem man die Vulkanisierung unter Druck des Elastomer-Werkstoffs vornimmt; wobei der angewendete Druck derart bestimmt wird, dass sich der Vliesstoff, der an der Oberfläche des Elastomers platziert wird, während des Vulkanisierungsprozesses zumindest an der Oberfläche in selbiges einarbeitet.

3. Verfahren nach einem der Ansprüche 1 oder 2, **dadurch gekennzeichnet, dass** der Vliesstoff (24) erzeugt wird, indem man die folgenden Vorgänge anwendet:
- Kardieren der Einzelfilamente aus einem thermoplastischen Werkstoff;
- Erzeugen von Schleiern, die übereinander überlagert und durch Vernadelung untereinander festgehalten werden;
- Verstärkung des Stoffes durch Wasserstrahlverfestigung.

4. Verfahren nach einem der Ansprüche 1 bis 3, **dadurch gekennzeichnet, dass** der Vliesstoff (24) aus einem thermoplastischen Werkstoff erzeugt wird, der derart ausgewählt wird, dass er sowohl mit dem thermoplastischen Werkstoff, der die Matrix des Verbundwerkstoffs bildet, verschweißt werden kann, als auch eine gute Vereinbarkeit mit dem Elastomer-Werkstoff aufweist.

5. Verfahren nach Anspruch 4, **dadurch gekennzeichnet, dass** der Vliesstoff (24) aus einem identischen thermoplastischen Werkstoff wie jenem erzeugt wird, der die Matrix des Verbundwerkstoffs (37) bildet.

6. Verfahren nach einem der Ansprüche 1 bis 5, **dadurch gekennzeichnet, dass** der verwendete Vliesstoff (24), da der Verbundwerkstoff (37) ein Verbund aus Kohlenstoff/Polyetheretherketon ist und der Elastomer-Werkstoff (25) vom Typ HNBR ist, aus Polyetherimid-Fasern gebildet wird.

7. Verfahren nach einem der vorstehenden Ansprüche, **dadurch gekennzeichnet, dass** der zweite Vorgang des Schweißens darin besteht, die Kontaktoberflächen der beiden zu verschweißenden Werkstoffe (33, 37) zu erhitzen, indem man zwischen diese beiden Oberflächen ein Metallgewebe (35) einfügt, das als Heizwiderstand fungiert, wobei das Metallgewebe selbst mit einem thermoplastischen Werkstoff imprägniert ist.

8. Verfahren nach Anspruch 7, **dadurch gekennzeichnet, dass** dem Schweißvorgang ein einleitender Vorgang zur Vorbereitung der Oberflächen der zu verbindenden Werkstoffe vorangeht, wobei dieser Vorgang je nach Zustand dieser Oberflächen entweder aus einer einfachen Entfettung mithilfe eines geeigneten Lösungsmittel, oder aus einem Feinschliff der funktionalisierten Oberfläche des Elements aus Elastomer, gefolgt von einer Reinigung der Oberflächen mit demselben Lösungsmittel bestehen kann.

9. Verfahren nach einem der vorstehenden Ansprüche, **dadurch gekennzeichnet, dass** der Vorgang der Funktionalisierung des Elastomer-Werkstoffs, da der Verbundwerkstoff ein Verbund aus Kohlenstoff/Polyetheretherketon ist und der Elastomer-Werkstoff vom Typ HNBR ist, die folgenden Vorgänge aufweist:
a) einen ersten Vorgang des Anbringens der folgenden Elemente auf der unteren Platte (21) der Vulkanisierungsform:
- zwei überlagerte Schichten (22, 23) aus mit Teflon beschichtetem Glasgewebe;
- eine Lage aus Vliesstoff (24) bestehend aus Polyetherimid-Fasern;
- die Lagen des rohen, nicht vulkanisierten Elastomer-Werkstoffs (25) ;
- ein Satz an Einfassungskeilen (26, 27);
- zwei überlagerte Schichten (28, 29) aus mit Teflon beschichtetem Glasgewebe;
wobei das Ganze mit der oberen Platte (211) der Vulkanisierungsform abgedeckt wird;
b) einen zweiten Vorgang des Anbringens der erzeugten Aufschichtung auf die Platte einer auf eine Temperatur θ2 von 140°C vorgeheizten Heißpresse;
c) einen dritten Vorgang des Warmpressens der Aufschichtung, bei dem man den nominalen Presszyklus anwendet, der sich für das betrachtete Elastomer eignet,
d) einen vierten Vorgang, bei dem man die Form aus der Presse entnimmt, während diese die Temperatur θ2 von 140°C beibehält, man das funktionalisierte Elastomer aus der Form nimmt und man dieses auf Umgebungstemperatur abkühlen lässt.

10. Verfahren nach Anspruch 9, **dadurch gekennzeichnet, dass** der Presszyklus des dritten Vorgangs aufweist:
- eine Phase des progressiven Anstiegs der Temperatur bis auf eine hohe Temperatur θ1 von 230°C mit einem Gradienten von 2,5°C/min,
- eine Phase des Haltens bei der Temperatur θ1 für die Dauer von 10 Minuten,
- eine Phase des Absinkens der Temperatur bis auf die Temperatur θ2 von 140°C gemäß einem Gradienten von 2,5°C/min.

11. Verfahren nach einem der vorstehenden Ansprüche, **dadurch gekennzeichnet, dass** der eigentliche Schweißvorgang, da der Verbundwerkstoff ein Verbund aus Kohlenstoff/Polyetheretherketon ist und der Elastomer-Werkstoff vom Typ HNBR ist, die folgenden Schritte aufweist:
a) einen ersten Schritt des Anbringens, bei dem man in erster Linie die folgenden Elemente in der Reihenfolge auf einer Platte (31) aus einem wärmeisolierenden Werkstoff anordnet:
- einen ersten Film (32) aus hitzefestem Polyimid,
- den funktionalisierten Elastomer-Werkstoff (33),
- einen ersten Film (34) aus Polyetherimid,
- ein mit Polyetherimid vorimprägniertes Metallgewebe (35),
- einen zweiten Film (36) aus Polyetherimid,
- den thermoplastischen Verbundwerkstoff (36),
- einen zweiten Film (37) aus Polyimid,
- eine Wärmedämmschicht (38),
- ein Glasgewebe (311);
b) einen zweiten Schritt, bei dem man eine Vakuumblase mit einem Film (312) aus Polyimid herstellt, welcher derart angeordnet wird, dass man das Metallgewebe (35) herausragen lässt, wobei die Dichtheit der Blase durch einen Hochtemperatur-Dichtstoff gewährleistet wird,
c) einen dritten Schritt, bei dem man die Blase (312) unter Vakuum setzt, man einen Stromversorgungsblock an das Metallgewebe (35) anschließt und man gemäß einem geeigneten Zyklus verschiedene Stromstärkenwerte anlegt,
d) einen vierten Schritt, bei dem man den Polyimid-Film (312), der als Vakuumplane dient, entfernt und man die Aufschichtung abbaut.

12. Verfahren nach Anspruch 11, **dadurch gekennzeichnet, dass** man im Laufe des dritten Schritts 200 Sekunden lang einen Strom von 15,6 Ampere und danach 100 Sekunden lang einen Strom von 10 Ampere an dem Metallgewebe (35) anlegt.

## Claims

1. Method for producing a welded structural link between a thermoplastic matrix composite material and an elastomer, comprising the following operations:
- a first operation of functionalising the elastomeric material (25) by means of a nonwoven fabric (24) consisting of fibres of thermoplastic material, with the functionalising being carried out by placing the fabric on the surface of the raw elastomeric material and penetration of the fabric into the superficial layer of the elastomeric material during the vulcanising operation of said elastomeric material, with the vulcanising being carried out by hot pressing of the elastomeric material and of the fabric deposited on the surface thereof;
- a second welding operation per se, during which the thermoplastic composite material (37) is welded to the functionalised layer of the elastomeric material (33).

2. Method according to claim 1, **characterised in that** the operation of elaborating the functionalised elastomer itself comprises several steps:
- a first step of cleaning the various portions of the vulcanisation mould (21, 211) used;
- a second step during which the nonwoven fabric (24) is applied to the surface of the elastomeric material (25);
- a third step during which the vulcanisation under pressure of the elastomeric material is carried out; with the pressure applied being determined in such a way that the nonwoven fabric placed at the surface of the elastomer becomes incorporated with the latter, at least at the surface, during the vulcanisation process.

3. Method according to one of claims 1 or 2, **characterised in that** the nonwoven fabric (24) is carried out by implementing the following operations:
- carding of the monofilaments of thermoplastic material;
- carrying out of voiles superimposed on one another and maintained between them by needle-punching;
- reinforcement of the textile by spunlacing.

4. Method according to any of claims 1 to 3, **characterised in that** the nonwoven fabric (24) is carried out in a thermoplastic material chosen so as to be able to be both welded to the thermoplastic material forming the matrix of the composite material and to have good compatibility with the elastomeric material.

5. Method according to claim 4, **characterised in that** the nonwoven fabric (24) is carried out in a thermoplastic material identical to the one forming the matrix of the composite material (37).

6. Method according to any of claims 1 to 5, **characterised in that**, as the composite material (37) is a carbon/polyetheretherketone composite and the elastomeric material (25) being of the HNBR type, the nonwoven fabric (24) used is formed from polyethermide fibres.

7. Method as claimed in any preceding claim, **characterised in that** the second welding operation consists in heating the contact surfaces of the two materials to be welded (33, 37) by inserting between these two surfaces a metal fabric (35) which acts as a heating resistance, with the metal fabric itself impregnated with thermoplastic material.

8. Method according to claim 7, **characterised in that** the welding operation is preceded by a preliminary operation of preparing the surfaces of the materials to be assembled, with this operation able to consist, according to the condition of these surfaces, either in a simple degreasing using a suitable solvent, or in a fine sanding of the functionalised surface of the elastomer element, followed by a cleaning of the surfaces with the same solvent.

9. Method as claimed in any preceding claim, **characterised in that**, the composite material being a carbon/polyetheretherketone composite and the elastomeric material being of the HNBR type, the functionalising operation of the elastomeric material comprises the following operations:
a) a first operation of placing the following elements on the lower plate (21) of the vulcanisation mould:
- two superimposed layers (22, 23) of Teflon-coated glass fabric;
- a fold of nonwoven fabric (24) comprised of polyetherimide fibres;
- the folds of the non-vulcanised raw elastomeric material (25);
- a set of edging wedges (26, 27);
- two superimposed layers (28, 29) of Teflon-coated glass fabric;
with the whole covered by the upper plate (211) of the vulcanisation mould;
b) a second placing operation of the stack carried out on the plate of a heat press preheated to a temperature θ2 of 140°C;
c) a third operation of hot pressing the stack, during which the suitable nominal press cycle is applied to the elastomer considered.
d) a fourth operation during which the mould of the press is removed while the latter maintains the temperature θ2 of 140°C, the functionalised elastomer is demoulded and the latter is allowed to cool to ambient temperature.

10. Method according to claim 9, **characterised in that** the press cycle of the third operation comprises:
- a phase of a progressive raising of temperature until a high temperature θ1 of 230°C with a gradient of 2.5°C/min,
- a phase of maintaining at the temperature θ1 for 10 minutes,
- a phase of lowering the temperature until the temperature θ2 of 140°C according to a gradient of 2.5°C/min;

11. Method as claimed in any preceding claim, **characterised in that**, as the composite material is a carbon/polyetheretherketone composite and the elastomeric material being of the HNBR type, the welding operation per se comprises the following steps:
a) A first placing step during which the following elements are placed mainly, in order, on a plate (31) of thermally isolating material:
- a first heat-resistant polyimide film (32),
- the functionalised elastomeric material (33),
- a first polyetherimide film (34),
- a metal fabric (35) preimpregnated with polyetherimide,
- a second polyetherimide film (36),
- the thermoplastic composite material (36),
- a second polyimide film (37),
- a layer of thermal insulation (38),
- a glass fabric (311);
b) A second step during which a bladder in a vacuum is carried out with a polyimide film (312) arranged in such a way as to allow the metal fabric (35) to emerge, with the seal of said bladder being provided by means of high-temperature mastic.
c) A third step during which the bladder (312) is placed in a vacuum, an electrical power supply unit is connected to the metal fabric (35) and various values of intensity are applied according to a suitable cycle.
d) A fourth step during which the polyimide film (312) used as a vacuum bag is removed and the stack is disassembled.

12. Method according to claim 11, **characterised in that** during the third step a current of 15.6 amperes is applied on the metal fabric (35) for 200 seconds then a current of 10 Amperes for 100 seconds.
